# EUROPEAN PATENT APPLICATION

(11) **EP 2 511 590 A1**
(43) Date of publication of application: **17.10.2012**
(21) Application number: 10835794.8
(22) Date of filing: 28.10.2010
(51) Int. Cl.: F21S 2/00, F21V 5/00, G02F 1/13357, H01L 33/58, F21Y 101/02

(54) **LIGHTING DEVICE, DISPLAY DEVICE, AND TELEVISION RECEPTION DEVICE**

(30) Priority: 08.12.2009 JP 2009278612
(71) Applicant: Sharp Kabushiki Kaisha, Osaka-shi, Osaka 545-8522 (JP)
(72) Inventor: SHIMIZU, Takaharu, Osaka-shi, Osaka 545-8522 (JP)
(74) Representative: Müller-Boré & Partner Patentanwälte
(86) International application number: PCT/JP2010/069166
(87) International publication number: WO 2011/070872

(57) **Abstract**

An object of the present invention is to provide a lighting device that can suppress uneven brightness. The lighting device of the present invention includes a plurality of LEDs 17 and a chassis 14 including a bottom plate 14a having a rectangular shape in a plan view. The chassis 14 is configured to house the LEDs 17 therein. The LEDs 17 are arranged along a surface of the bottom plate 14a in rows and columns in a row direction and a column direction. The LEDs 17 arranged in the row direction configure a light source group 50 and a plurality of light source groups 50 are arranged in a column direction. The light source groups 50 include a middle light source group 51 and an end side light source group 52. The middle light source group 51 includes the light source group 50 provided in a middle portion of the bottom plate 14a in the column direction and the end side light source group 52 includes the light source group 50 provided in an end portion of the bottom plate 14a in the column direction. The LED 17A of the end side light source group 52 that is arranged at a most distal end on one end side in the row direction is arranged on an outer side in the row direction on the bottom plate 14a than the LED 17B of the middle light source group 51 that is arranged at a most distal end on the one end side in the row direction.

## Description

### TECHNICAL FIELD

The present invention relates to a lighting device, a display device and a television receiver.

### BACKGROUND ART

In recent years, image display devices including a television receiver are shifting from conventional cathode-ray tubes to thin display devices including thin display elements, such as a liquid crystal panel and a plasma display panel. When the liquid crystal panel is used as the image display device, the liquid crystal panel requires a backlight unit as a separate lighting device, because the liquid crystal panel does not emit light. One example of a backlight unit is described in Patent Document 1. The backlight unit described in Patent Document 1 has a planar light source including a plurality of light sources (LED) arranged in rows and columns.

Patent Document 1: Japanese Unexamined Patent Publication No. 2007-317423

### Problem to be Solved by the Invention

The above-described backlight unit includes a plurality of light sources (LED) arranged in rows and columns. Thus, a surface of the backlight unit on which the light sources are mounted (a light exit surface) includes the light sources at a high density in a middle portion and at a low density in a peripheral portion. Accordingly, the brightness is relatively high in the middle portion and relatively low in the peripheral portion. For example, if a chassis has a rectangular shape in a plan view and has the light sources arranged in rows and columns over the entire surface thereof, the light sources are arranged at a low density, especially, in all corner portions (four corner portions) of the chassis. Thus, the brightness is decreased at the corner portions and uneven brightness may be caused.

### DISCLOSURE OF THE PRESENT INVENTION

The present invention was accomplished in view of the above circumstances. It is an object of the present invention to provide a lighting device that can suppress the uneven brightness. Further, it is another obj ect of the present invention to provide a display device and a television receiver each including the lighting device.

### Means for Solving the Problem

To solve the above problem, a lighting device includes a plurality of light sources, and a chassis including a bottom having a rectangular shape in a plan view, the chassis being configured to house the light sources therein. The light sources are arranged along a surface of the bottom in rows and columns in a row direction and a column direction. The light sources arranged in the row direction configure a light source group and a plurality of light source groups are arranged in a column direction. The light source groups include a middle light source group and an end side light source group. The middle light source group includes the light source groups provided in a middle portion of the bottom in the column direction and the end side light source group includes the light source groups provided in an end portion of the bottom in the column direction. One of the light sources of the end side light source group that is arranged at a most distal end on one end side in the row direction is arranged on an outer side in the row direction on the bottom than one of the light sources of the middle light source group that is arranged at a most distal end on the one end side in the row direction.

When the light sources are arranged in rows and columns on the bottom of the chassis having a rectangular shape in a plan view, the corner portions of the bottom each have the light sources in a lower density than the middle portion. Thus, the corner portions of the bottom are likely to be dark portions. In order to prevent such a situation, for example, the number of the light sources may be increased at the corner portions of the bottom. However, it is not preferable since the power consumption and the cost of the components will be increased as the number of the light sources is increased.

In view of the above, the present invention employs a configuration in which one of the light sources of the end side light source group that is arranged at a most distal end on one end side in the row direction is arranged on an outer side in the row direction on the bottom than one of the light sources of the middle light source group that is arranged at a most distal end on the one end side in the row direction. Namely, the light source of the end side light source group that is arranged at the most distal end on the one end side in the row direction (the light source close to the corner portion of the bottom) is arranged closer to the corner portion of the bottom. This configuration can suppress that the brightness at the corner portion is lower than the brightness at the middle portion, and the uneven brightness is not likely to be caused. As described above, in the present invention, the decrease in the brightness at the corner portions are suppressed by adjusting the positions of the light sources. Thus, unlike the case where additional light sources are provided at the corner portions, additional cost is not required.

In the above configuration, each of the light sources of the end side light source group that is arranged at the most distal end on two ends of the end side light source group in the row direction may be arranged on the outer side in the row direction on the bottom than each of the light sources of the middle light source group that is arranged at the most distal end on two ends of the middle light source group in the row direction. This configuration can suppress the decrease in the brightness at the corner portions each corresponding to each of the light sources of the end side light source group that are arranged at the most distal ends on two end sides in the row direction.

The one of the light sources of the end side light source group that is arranged at the most distal end on the one end side in the row direction may be arranged on an outer side in the column direction on the bottom than adjacent one of the light sources of the end side light source group. This configuration allows the light source that is arranged at the most distal end on the one end side in the row direction on the bottom to be arranged closer to the corresponding corner. This effectively suppresses the decrease in the brightness at the corner portions.

The end side light source group may include a plurality of end side light source groups arranged in the column direction. The end side light source groups include a first end side light source group arranged on the end portion of the bottom in the column direction, and a second end side light source group arranged in the middle portion of the bottom in the column direction. One of the light sources of the first end side light source group that is arranged at the most distal end on the one end side in the row direction is arranged on the outer side in the row direction on the bottom than one of the light sources of the second end side light source group that is arranged at the most distal end on the one end side in the row direction.

The light source group may include at least three light source groups arranged in the column direction, and each of the light source groups arranged at two ends in the column direction may be the end side light source group. This configuration suppress the decrease in the brightness at the corner portions each corresponding to the light source of the light source groups provided at the ends in the column direction that is arranged at the most distal end in the row direction.

The lighting device may further include a diffuser lens configured to diffuse light from the light source. The diffuser lens is provided on a light exit side of the light source. This can uniform the brightness with intervals between the light sources increasing (in other words, with the number of the LEDs reducing). Accordingly, compared with the case where the diffuser lens is not used, the number of the light sources and the light source units can be reduced when the uniform brightness distribution is required. This also can reduce the cost.

The light source may be an LED. This achieves improved brightness and low power consumption.

Next, to solve the above problem, a display device of the present invention may include the above lighting device and a display panel configured to provide display using light from the lighting device.

The display panel may be a liquid crystal panel. The display device as a liquid crystal display device has a variety of applications, such as a television display or a personal-computer display. Particularly, it is suitable for a large screen display.

Next, to solve the above problem, the television receiver of the present invention may include the above display device.

### Advantageous Effect of the Invention

According to the present invention, a lighting device that can suppress uneven brightness, a display device and a television receiver each including the lighting device can be provided.

### BRIEF DESCRIPTION OF THE DRAWINGS

FIG. 1 is an exploded perspective view illustrating a general configuration of a television receiver according to a first embodiment of the present invention;
FIG. 2 is an exploded perspective view illustrating a general configuration of a liquid crystal display device included in the television receiver shown in FIG. 1;
FIG. 3 is a plan view illustrating a backlight device included in the liquid crystal display device shown in FIG. 2;
FIG. 4 is a cross-sectional view of the liquid crystal display device shown in FIG. 2 taken along a long side thereof (a cross-sectional view taken along iv-iv line in FIG. 3);
FIG. 5 is a cross-sectional view of the liquid crystal display device shown in FIG. 2 taken along a short side thereof (a cross-sectional view taken along a v-v line in FIG. 3);
FIG. 6 is an enlarged cross sectional view of the circumference of the LED in FIG. 4;
FIG. 7 is a plan view illustrating a backlight device according to a second embodiment of the present invention; and
FIG. 8 is a plan view illustrating a backlight device according to a third embodiment of the present invention.

### BEST MODE FOR CARRYING OUT THE INVENTION

### <First Embodiment>

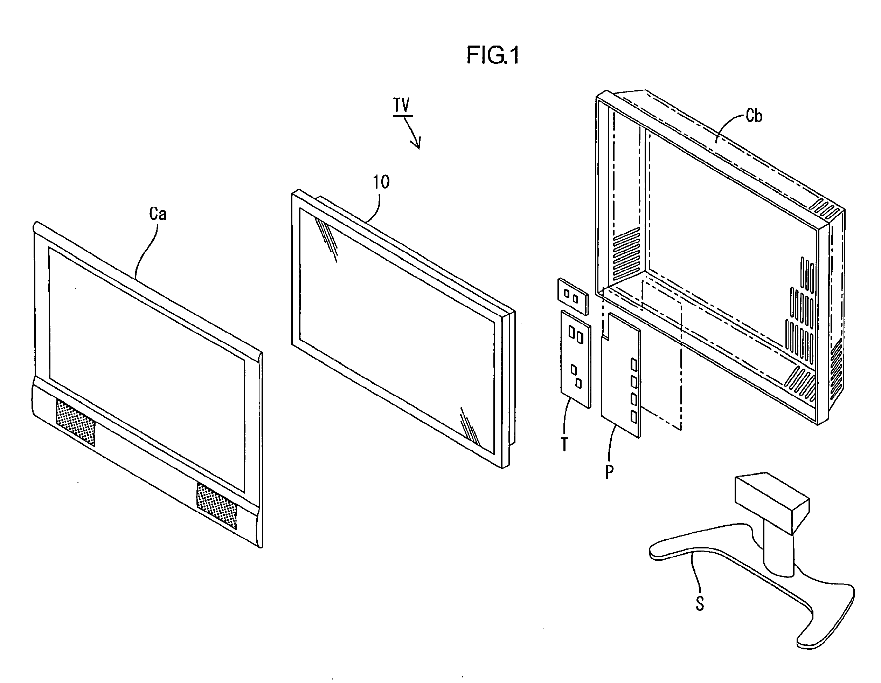

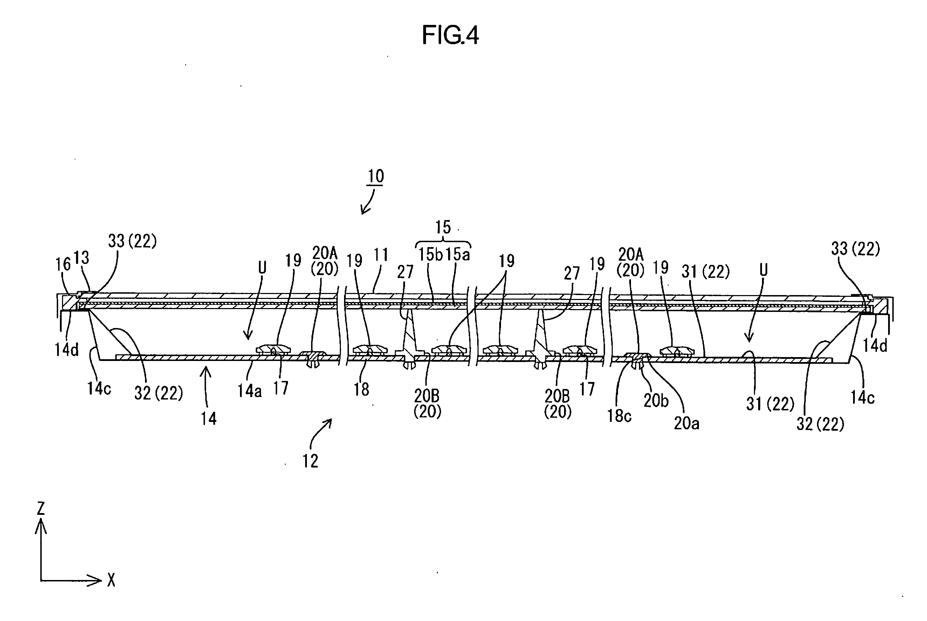

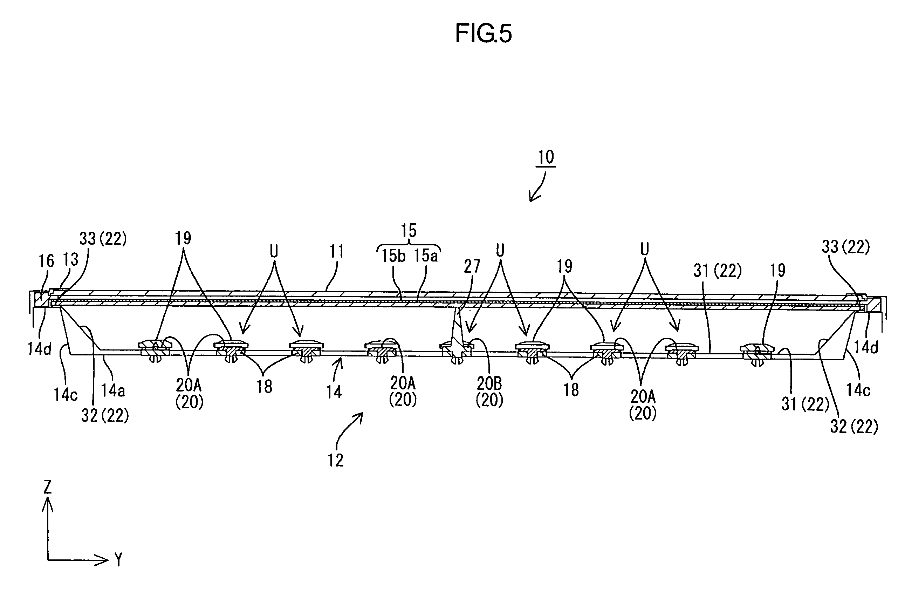

A first embodiment of the present invention will be described with reference to FIGS. 1 to 6. In this embodiment, a liquid crystal display device 10 will be explained. Note that each of the drawings in the present embodiment has a part showing an X-axis, a Y-axis and a Z-axis. The X-axis direction and the Y-axis direction, respectively, correspond to the long side direction and the short side direction of the liquid crystal display device 10 and a liquid crystal panel 11 (which will be described later). Additionally, the up and down direction in FIGS. 4 and FIG. 5 corresponds to the Z-axis direction (the front-back direction), and the upper side in FIG. 4 and FIG. 5 is the front side, and the lower side therein is the back side.

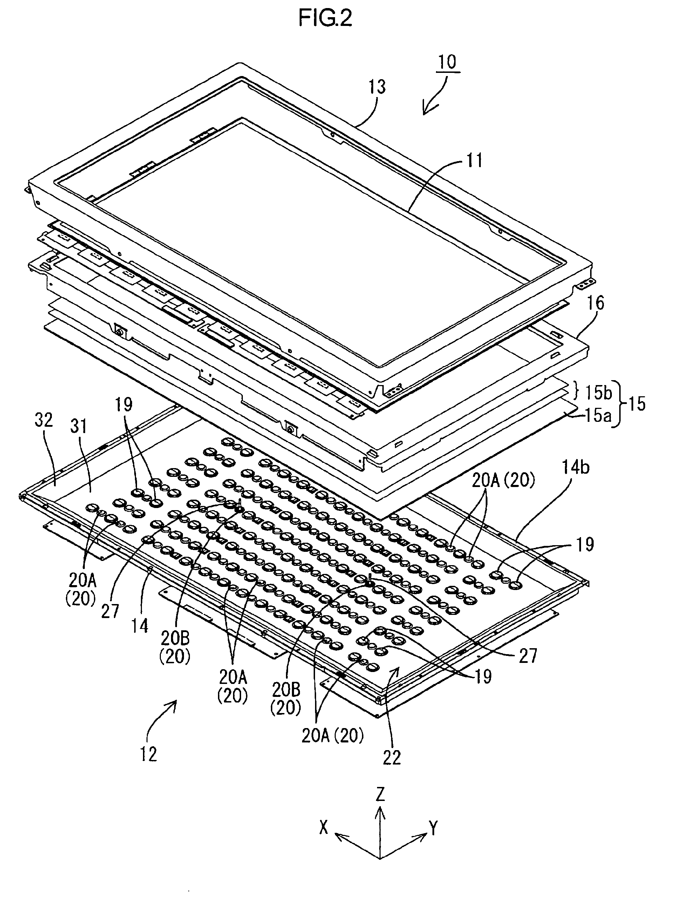

A television receiver TV according to the present embodiment, as illustrated in FIG. 1, includes a liquid crystal display device 10, front and back cabinets Ca and Cb, a power supply P, a tuner T and a stand S. The front and back cabinets Ca and Cb sandwich, and thus house, the liquid crystal display device 10. An entire shape of the liquid crystal display device 10 (display device) has a landscape quadrangular shape (rectangular shape) as a whole. The liquid crystal display device 10 is housed in a vertical position. As illustrated in FIG. 2, the liquid crystal display device 10 includes a liquid crystal panel 11 as a display panel, and a backlight device 12 (lighting device) as an external light source. The liquid crystal panel 11 and the backlight device 12 are integrally held by a frame shaped bezel 13 and the like. In the present embodiment, a display size is 42 inches and an aspect ratio is 16:9.

Next, the liquid crystal panel 11 and the backlight device 12 included in the liquid crystal display device 10 will be explained sequentially. The liquid crystal panel 11 (display panel) has a landscape rectangular shape with a plan view and is configured such that a pair of glass substrates is bonded together with a predetermined gap therebetween and liquid crystal is sealed between the glass substrates. On one of the glass substrates, switching components (for example, TFTs) connected to source lines and gate lines which are perpendicular to each other, pixel electrodes connected to the switching components, and an alignment film and the like are provided. On the other substrate, color filters having color sections such as R (red), G (green) and B (blue) color sections arranged in a predetermined pattern, counter electrodes, and an alignment film and the like are provided. Polarizing plates are attached to outer surfaces of the substrates.

Next, the backlight device 12 will be explained in detail. The backlight device 12 is a direct backlight device that includes a plurality of LEDs 17 at right behind a panel surface (display surface) of the liquid crystal panel 11. As illustrated in FIG. 2, the backlight device 12 includes a chassis 14, an optical sheet set 15 (a diffuser 15a and a plurality of optical sheets 15b which is provided between the diffuser 15a and the liquid crystal panel 11), a frame 16 and a chassis reflection sheet 22. The chassis 14 is formed in substantially a box-shape and has an opening 14b on a light exit side (on a liquid crystal panel 11 side). The optical sheet set 15 is provided so as to cover the opening 14b of the chassis 14. The frame 16 provided along an outer edge of the chassis 14 holds an outer edge of the optical sheet set 15 such that the outer edge is sandwiched between the frame 16 and the chassis 14. The reflection sheet 22 covers almost entire inner surface of the chassis and reflects light in the chassis 14 to the optical member 15 side.

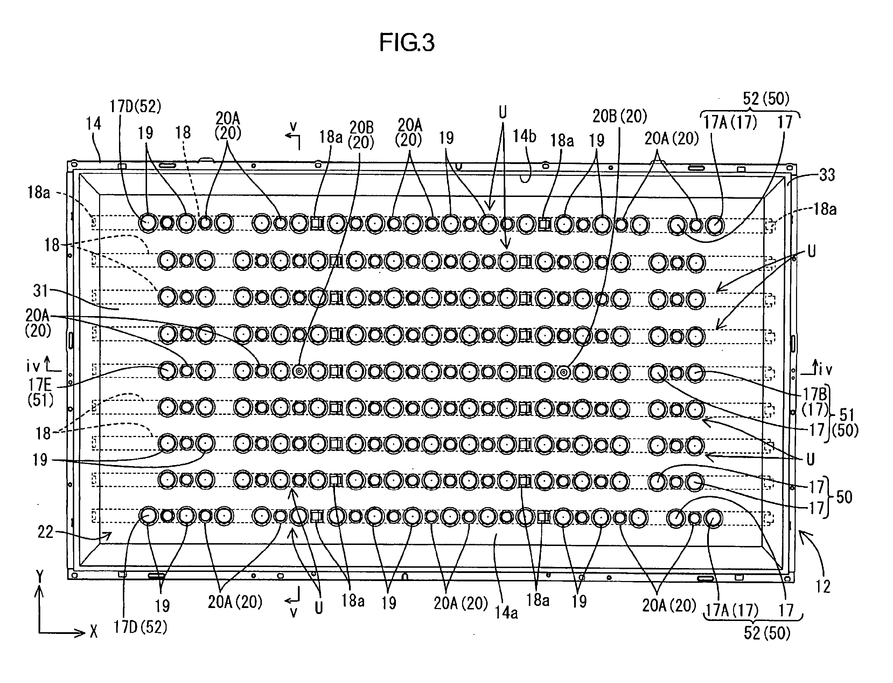

As illustrated in FIG. 3, a plurality of LED units U (light source unit) each including the LEDs 17 (Light Emitting Diodes) that are light sources is housed in the chassis 14. Holding members 20 are provided to hold the LED unit U to the chassis 14. In the backlight device 12, a light exit side of the backlight device 12 is a side closer to the diffuser 15a than the LED unit U (front surface side). In the following, each component of the backlight device 12 will be explained in detail.

The chassis 14 is made of metal. As illustrated in FIGS. 3 to 5, the chassis 14 includes a bottom plate 14a having a landscape quadrangular shape (a rectangular shape) in a plan view like the liquid crystal panel 11, side plates 14c each of which rises from an outer edge of the corresponding side of the bottom plate 14a, and a receiving plate 14d outwardly extending from a rising edge of each of the side plates 14c. An entire shape of the chassis 14 is formed substantially in a shallow box shape (shallow plate shape) opened to the front surface side. A long side of the chassis 14 matches an X-axis direction (a horizontal direction) and a short side thereof matches a Y-axis direction (a vertical direction). The frame 16 and the optical member 15 can be placed on the receiving plate 14d of the chassis 14 from the front-surface side. The frame 16 is fixed to each receiving plate 14d with screws. The shape of the bottom plate 14a of the chassis 14 is not limited to the landscape shape and may be square, for example.

As illustrated in FIG. 2, the optical member 15 has a landscape quadrangular shape (rectangular shape) in a plan view like the liquid crystal panel 11 and the chassis 14. As illustrated in FIGS. 4 and 5, the outer edge of the optical member 15 is placed on the receiving plate 14d so as to cover the opening 14b of the chassis 14 and provided between the liquid crystal panel 11 and the LED unit U.

The optical member 15 includes a diffuser 15a and an optical sheet 15b. The diffuser 15a is provided on the rear-surface side (the LED unit U side, a side opposite from the light exit side) and the optical sheet 15b is provided on the front-surface side (the liquid crystal panel 11 side, the light exit side). The diffuser 15a includes a base member having a predetermined thickness and made of a substantially transparent synthetic resin and light scattering particles dispersed in the base member. The diffuser 15a has a function for diffusing light transmitting therethrough. The optical sheet 15b is formed in a sheet having a thickness smaller than the diffuser 15a. A specific optical sheet 15b may include a diffuser sheet, a lens sheet, a reflecting type polarizing sheet, and any one of them may be selected to be used.

As illustrated in FIG. 2, the frame 16 is formed in a frame shape along an outer peripheral part of the liquid crystal panel 11 and the optical member 15. The frame 16 and each receiving plate 14d hold the outer peripheral part of the optical member 15 therebetween (FIG. 4). The frame 16 receives a rear surface of the outer peripheral part of the liquid crystal panel 11. Further, a bezel 13 is fixed on the front-surface side of the frame 16 with screws (not illustrated), whereby the outer peripheral part of the liquid crystal panel 11 is held between the bezel 13 and the frame 16.

Next, the LED unit U will be explained in detail. As illustrated in FIG. 3, the LED unit U has an elongated shape along the X-axis direction and a plurality of LED units U (nine LED units U in the present embodiment) are arranged along the Y-axis direction. As illustrated in FIG. 3 and FIG. 4, the LED unit U includes, as main components, the LEDs 17 (light sources) and an LED board 18 on which the LEDs 17 are mounted. The LED unit U further includes the diffuser lenses 19 arranged on the LED board 18 so as to correspond to each LED 17, and a board reflection sheet 23. Each component of the LED unit U will be explained in the following.

The LED 17 is a point light source formed in a point-like shape in a plan view. The LEDs 17 are arranged along the long-side direction (X-axis direction) of the LED board 18. The LED is configured by sealing a LED chip with a resin material. The LED chip has one main light emission wavelength and specifically, the LED chip that emits a single color of blue is used. On the other hand, a fluorescent material is dispersed in the resin material that seals the LED chip therein. The fluorescent material converts blue light emitted from the LED chip into white light. This enables the LED 17 to emit white light.

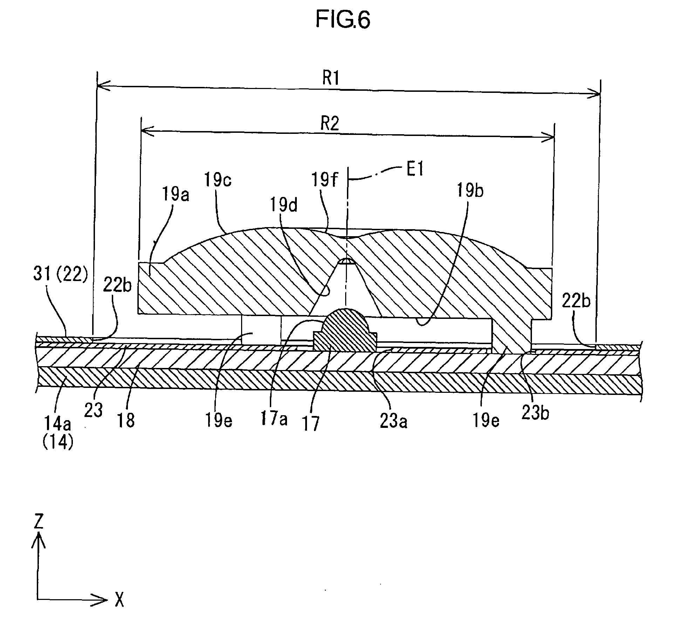

As illustrated in FIG. 6, the LED 17 is a top-type LED that has a light emitting surface 17a (a light exit surface) on a surface opposite from the mounting surface that is to be mounted to the LED board 18 (a surface that faces the front-surface side). A light axis E1 of the LED 17 substantially matches the Z-axis direction (a direction perpendicular to a main plate surface of the liquid crystal panel 11 and the optical member 15). Light emitted from the LED 17 radiates three-dimensionally around the light axis E1 within a specified angle range and the directivity thereof is higher than that of cold cathode tubes. Namely, angle distributions of the LED 17 show a tendency that the emission intensity of the LED 17 is significantly high along the light axis E1 and sharply decreases as the angle to the light axis E1 increases.

As illustrated in FIGS. 3 to 5, the LED board 18 has an elongated rectangular shape along the X-axis direction in a plan view, and the LED board 18 is housed in the chassis 14 with extending along the bottom plate 14a such that a long-side direction of the LED board 18 matches the X-axis direction and a short-side direction thereof matches the Y-axis direction. The LEDs 17 are arranged on the bottom plate 14a of the chassis 14. Further, a connector portion 18a is provided at each end of the LED board 18 in the long-side direction.

The diffuser lens 19 is made of a synthetic resin (such as polycarbonate or acrylic) that is substantially transparent (has high light transmission) and has refraction index higher than air. As illustrated in FIG. 6, the diffuser lens 19 has a predetermined thickness and has a lens body 19a formed in substantially a circular shape in a plan view and the diffuser lens 19 is mounted to the LED board 18 so as to cover each LED 17 from the front-surface side individually and overlap each LED 17 in a plan view.

At a peripheral portion of a lower surface 19b of the diffuser lens 19, leg portions 19e are vertically provided. Three leg portions 19e are arranged along the peripheral portion of the diffuser lens 19 at substantially equal intervals (at about 120 degree intervals) in a plan view. The leg portions 19e are fixed to a surface of the LED board 18, for example, with an adhesive agent or a thermosetting resin. At a portion of a lower surface of the diffuser lens 19 (a surface facing the LED 17 and the LED board 18) that overlaps the LED 17 in a plan view, a light entrance recess 19d is provided. The light entrance recess 19d is formed in substantially a conical shape recessed toward the upper side. The light exiting from the LED 17 enters into the light entrance recess 19d. The lower surface of the diffuser lens 19 is roughened by grain finishing, for example.

At a middle portion of an upper surface of the diffuser lens 19 (a surface facing the diffuser 15a) that overlaps the LED 17 in a plan view, a recess 19f that is recessed toward the lower side is provided. In a cross-sectional view, a light exit surface 19c is shaped to have two connected gentle arcs. The light emitted from the LED 17 is refracted between an air layer and the light entrance recess 19d and between the light exit surface 19c and an air layer, thereby being diffused planarly. Accordingly, the light is emitted from the LED 17 at a wide angle from the light exit surface 19c to the diffuser 15a side. With this configuration, the diffuser lens 19 can exit the light with diffusing the light having high directivity exited from the light exit surface 17a of the LED 17. In other words, the directivity of the light emitted from the LED 17 is lowered through the diffuser lens 19, and therefore, even if a distance between the adjacent LEDs 17 increases, the portion between the adjacent LEDs 17 is less likely to be recognized as dark portions. Accordingly, the number of the LEDs 17 that are to be arranged can be reduced.

At a portion of the light exit surface 19c that overlaps the LED 17 in a plan view, the amount of light from the LED 17 is extremely great and brightness is locally high. The recess 19f is formed on the middle portion of the upper surface of the diffuser lens 19 such that most of the rays of light emitted from the LED 17 is refracted at a wide angle to exit therefrom or a part of the rays of light emitted from the LED 17 is reflected to the LED board 18 side. Accordingly, it is suppressed that brightness of the portion of the light exit surface 19c that overlaps the LED 17 is locally high and unevenness of brightness is less likely to occur.

As illustrated in FIG. 6, a board reflection sheet 23 is provided to cover independently each LED board 18. The board reflection sheet 23 is made of a synthetic resin, for example, and has a surface having white color that provides excellent light reflectivity. The board reflection sheet 23 extends along the LED board 18 and has a substantially same outer shape as the LED board 18, which is a rectangular shape in a plan view. As illustrated in FIG. 6, the board reflection sheet 23 is arranged to cover the front side surface of the LED board 18 that is the mounting surface where the LEDs 17 are mounted and cover almost an entire area of the mounting surface from the front side.

The board reflection sheet 23 is provided between the diffuser lens 19 and the LED board 18. Specifically, the board reflection sheet 23 is provided to overlap lens fitting hole 22b (which will be described later) formed in the chassis reflection sheet 22 in a plan view. Accordingly, the light entering a portion corresponding to the lens fitting hole 22b is reflected by the board reflection sheet 23 to the diffuser lens 19 side. This improves light use efficiency and improved brightness is achieved. In other words, sufficient brightness is obtained with decreasing the number of the LEDs 17 and lowering a cost.

As illustrated in FIG. 6, an LED fitting hole 23a is provided in a portion of the board reflection sheet 23 that overlaps each LED 17 on the LED board 18 in a plan view. Each LED 17 is fitted in the LED fitting hole 23a. A diameter of each LED fitting hole 23a is greater than that of the LED 17 and smaller than that of the lens fitting hole 22b of the chassis reflection sheet 22 and the diffuser lens 19.

Leg portion fitting holes 23b are provided in the board reflection sheet 23. The leg portion fitting holes 23b are through holes and the leg portion 19e is fitted through each leg portion fitting hole 23b. Each leg portion fitting hole 23b is formed in substantially a circular shape with a plan view so as to fit to an outer shape of the leg portion 19e. A diameter of each leg portion fitting hole 23b is slightly greater than that of the leg portion 19e.

As illustrated in FIG. 3, a plurality of LED units U including the above components are aligned in the X-axis direction and in the Y-axis direction within the chassis 14 such that they are justified in the long-side direction and in the short-side direction. Namely, the LED units U (the LED boards 18) are arranged in rows and columns (in a matrix) within the chassis 14. The X-axis direction (the long-side direction of the chassis 14 and the LED board 18) corresponds to a row direction and the Y-axis direction (the short-side direction of the chassis 14 and the LED board 18) corresponds to a column direction. With this configuration, the LEDs 17 are arranged along a surface of the bottom plate 14a of the chassis 14 in rows and columns to be arranged in a row direction (X-axis direction) and a column direction (Y-axis direction).

Herein, the phrase "arranged in a row direction" refers to a state where the LEDs 17 are arranged linearly along one direction (X-axis direction). The phrase "arranged in a column direction" refers to a state where the LEDs 17 are arranged linearly along another direction (Y-axis direction) crossing the above one direction (X-axis direction). Further, the phrase "the LEDs 17 are arranged along one (another) direction" is not limited to a state where all of the LEDs 17 are arranged in a straight line. Such a phrase includes a configuration in which a line connecting the LEDs 17 is a non-straight line. The arrangement of the LEDs 17 will be described later.

Specifically, three LED units U are arranged in the X-axis direction and nine LED units U are arranged in the Y-axis direction within the chassis 14, and thus a total of twenty seven LED units U are arranged in parallel within the chassis 14. As described above, the respective LED boards 18 that are arranged along the X-axis direction are electrically connected to each other by connecting the adjacent connector portions 18a by fitting. The connector portions 18a located at the ends of the chassis 14 in the X-axis direction are electrically connected to an external control circuit that is not illustrated. Accordingly, the LEDs 17 arranged on each of the LED boards 18 that are arranged to form a row are connected in series and turning on and off of the LEDs 17 included in one row of the LED boards 18 can be controlled collectively by one control circuit. This achieves a low cost.

As illustrated in FIG. 4, each of the above LED boards 18 is fixed to the bottom plate 14a of the chassis 14 by holding members 20. Each holding member 20 includes a disk-shaped pressing portion 20a and a fixing portion 20b protruding downward from the pressing portion 20a. Through holes 18c are formed through the LED board 18 such that the fixing portion 20b pass through the LED board 18. Further, mounting holes are formed through the bottom plate 14a of the chassis 14 such that the mounting holes are each communicated with the through hole 18c. The end portion of the fixing portion 20b of the holding member 20 is an elastic wide portion, thus can be stopped at the rear surface of the bottom plate 14a of the chassis 14 by passing through the through hole 18c and the mounting hole of the bottom plate 14a. Due to this configuration, the pressing portions 20a hold the LED board 18 and the holding members 20 fix the LED board 18 to the bottom plate 14a.

As illustrated in FIG. 2, a supporting pin 27 is vertically provided on a surface of the holding member 20B that is positioned near the center portion of the bottom plate 14a of the chassis 14. The supporting pin 27 has a conical shape that is tapered toward the front side and the tip end thereof is rounded. The tip portion of the supporting pin 27 comes in point contact with the diffuser 15a when the diffuser 15a is bent downward, whereby the diffuser 15a is stopped at the backside. As a result, the uneven brightness caused by the bending of the diffuser 15a can be prevented. Note that the holding member 20 having no supporting pin 27 thereon is indicated by a symbol 20A.

The chassis reflection sheet 22 has a size that covers almost entire inner surface of the chassis 14. The chassis reflection sheet 22 is made of a synthetic resin, and has a surface having white color that provides excellent light reflectivity. As illustrated in FIG. 3, the chassis reflection sheet 22 extends along the inner surface of the chassis 14. Almost entire area of a middle portion of the chassis reflection sheet 22 extending along the bottom plate 14a of the chassis 14 is a sheet bottom 31.

As illustrated in FIG. 3, the sheet bottom 31 has a substantially rectangular shape in a plan view. As illustrated in FIG. 6, the lens fitting holes 22b are formed through the sheet bottom 31. The above diffuser lens 19 can be inserted through the lens fitting holes 22b. The lens fitting holes 22b are provided in parallel so as to correspond to the arrangement of the diffuser lenses 19 (in other words, in a matrix). The lens fitting hole 22b has a circular shape in a plan view so as to correspond to the shape of the diffuser lens 19, and a diameter R1 of the lens fitting hole 22b is greater than a diameter R2 of the diffuser lens 19.

Accordingly, in arranging the chassis reflection sheet 22 within the chassis 14, each diffuser lens 19 can be fitted through each lens fitting hole 22b surely even if dimension errors occur. As illustrated in FIG. 3, the chassis reflection sheet 22 covers portions between adjacent diffuser lenses 19 and outer peripheral portions of the chassis 14. Therefore, the chassis reflection sheet 22 reflects light directing toward the portions toward the optical member 15 side.

As illustrated in FIG. 3, a sheet sloped portion 32 is provided so as to extend from each of marginal portions (four peripheral sides) of the sheet bottom 31. The sheet sloped portions 32 are each lifted up from the sheet bottom 31 so as to cover the side plates 14c of the chassis 14 (FIGS. 4 and 5). A placement portion 33 is provided so as to extend from a marginal portion of each sheet sloped portion 32 along the receiving plate 14d. The placement portion 33 is placed on the receiving plate 14d. The optical member 15 is supported on the placement portion 33. In other words, the placement portion 33 is sandwiched between the chassis 14 and the optical member 15.

Next, an arrangement of the LEDs 17 of the present embodiment will be described in detail. As described above, the LEDs 17 are substantially arranged in rows and columns in a plan view (FIG. 3). Each of the LEDs 17 is positioned at the center of the respective diffuser lens 19 in a plan view, as described above. Thus, in FIG. 3, each LED 17 is schematically indicated by a point located in the center of the diffuser lens 19.

In the present embodiment, a plurality (here, nine) of groups of the LEDs 17 (hereinafter referred to as light source groups 50) are arranged in parallel in the Y-axis direction (column direction). Each of the groups includes the LEDs 17 that are arranged along the X-axis direction (row direction). The light source groups 50 include a middle light source group 51 and an end side light source group 52. The middle light source group 51 includes the light source groups provided in the middle portion of the bottom plate 14a in the Y-axis direction (column direction) and the end side light source group 52 includes the light source groups provided in an end portion of the bottom plate 14a in the Y-axis direction (either one of the up and down sides in FIG. 3). In the present embodiment, the light source group 50 that is provided at each end portion in the Y-axis direction will be explained as one example of the end side light source group 52. As one example of the middle light source group 51, one of the nine light source groups 50 that is provided in a middle portion in the Y-axis direction will be explained.

One of the LEDs 17 (indicated by a symbol 17A) of the end side light source group 52 that is arranged at a most distal end on a right side (on one end side) in FIG. 3 is arranged on an outer side (right side in FIG. 3) in the X-axis direction (row direction) on the bottom plate 14a than one of the LEDs 17 (indicated by a symbol 17B) of the middle light source group 51 that is arranged at a most distal end on the right side (on the one end side) in FIG. 3. In other words, the LED 17A is arranged closer to the corner portion of the bottom plate 14a (specifically, corresponding one of four corner portions) in the X-axis direction than the LED 17B.

One of the LEDs 17 (indicated by a symbol 17D) of the end side light source group 52 that is arranged at a most distal end on a left side (on one end side) in FIG. 3 is arranged on an outer side (left side in FIG. 3) in the X-axis direction (row direction) on the bottom plate 14a than one of the LEDs 17 (indicated by a symbol 17E) of the middle light source group 51 that is arranged at a most distal end on the left end (on the one end side) in FIG. 3.

In other words, the LEDs 17A and 17D of the end side light source group 52 that are arranged at the most distal ends on the two ends in the row direction are respectively arranged on the outer side in the X-axis direction (row direction) on the bottom plate 14a than the LED 17B and 17E of the middle light source group 51 that are arranged at the most distal ends on the two ends in the row direction. This configuration may be applied to only one of the LEDs 17A and 17D that is arranged at the most distal end on one end in the row direction.

In the present embodiment, in each of the light source groups 50 except for the end side light source groups 52, the LEDs 17 that are arranged at the most distal ends on the two ends in the row direction are arranged at the same position in the X-axis direction. In other words, the length in the X-axis direction (the length measured from the LED 17 at one end to the LED 17 at the other end) of the end side light source group 52 is longer than that of the other light source groups 50.

As described above, the backlight device 12 according to the present embodiment includes the LEDs 17 and the chassis 14 including the bottom plate 14a (bottom) having a rectangular shape in a plan view. The LEDs 17 are arranged along the surface of the bottom plate 14a in rows and column in the row direction (X-axis direction) and the column direction (Y-axis direction). The light sources arranged in the X-axis direction configure the light source group 50 and a plurality of light source groups are arranged in the Y-axis direction. The light source groups 50 include the middle light source group 51 and the end side light source group 52. The middle light source group 51 includes the light source groups 50 provided in the middle portion of the bottom plate 14a in the Y-axis direction and the end side light source group 52 includes the light source groups 50 provided in the end portion of the bottom plate 14a in the Y-direction. One of the LEDs 17 of the end side light source group 52 that is arranged at the most distal end on one side in the row direction (for example, LED 17A) is arranged on the outer side in the Y-axis direction (row direction) on the bottom plate 14a than one of the LEDs 17 of the middle light source groups 51 that is arranged at the most distal end on the one side in the row direction (for example, LED 17B).

The corner portions of the bottom plate 14a tend to be dark in a configuration that the LEDs 17 are arranged in rows and columns on the bottom plate 14a having a rectangular shape in a plan view, because the LEDs 17 are arranged at the corner portions in a lower density than the middle portion of the bottom plate 14a. To prevent such a situation, for example, the number of the LEDs 17 at the corner portions of the bottom plate 14a may be increased. However, it is not preferable, since the increase in the number of the LEDs 17 increases the cost of the components and power consumption.

In view of the above, in the backlight device 12 of the present embodiment, one of the LEDs 17 of the end side light source group 52 that is arranged at the most distal end on one side in the row direction is arranged on the outer side in the X-axis direction (row direction) on the bottom plate 14a than one of the LEDs 17 of the middle light source group 51 that is arranged on the most distal end on the one side in the row direction. Specifically, the LEDs 17A and 17D of the end side light source group 52 that are arranged at the most distal ends in the row direction (the LEDs 17 closer to the corner portions of the bottom plate 14a) are arranged so as to be closer to the corner portions of the bottom plate 14a in the X-axis direction than the LEDs 17B and 17E of the middle light source group 51 that are arranged at the most distal ends in the row direction. This configuration prevents the decrease in the brightness at the corner portions, and the uneven brightness is not likely to be caused. As described above, in the present embodiment, the decrease in the brightness at the corner portions is prevented by adjusting the positions of the LEDs 17. Thus, unlike the case where additional LEDs 17 are provided at the corner portions, the present embodiment can prevent the increase in the cost.

The LEDs 17A and 17D of the end side light source group 52 that are arranged at the most distal ends on the two ends in the row direction are respectively arranged on the outer side in the X-axis direction on the bottom plate 14a than the LEDs 17B and 17E of the middle light source group 51 that are arranged at the most distal ends on the two ends in the row direction. This configuration can prevent the decrease in the brightness at the respective corner portions corresponding to the LEDs 17A and 17D of the end side light source group 52 that are arranged at the most distal ends on the two ends in the row direction (corner portions nearest to the LEDs 17A and 17D).

At least three (nine in the present embodiment) light source groups 50 are arranged in rows in the Y-axis direction. The light source groups 50 provided at the ends in the Y-direction are the end side light source groups 52. This configuration can prevent the decrease in the brightness at the respective corner portions corresponding to the LEDs 17A and 17D that are arranged at the most distal ends in the row direction of the light source groups 50 arranged at the ends in the Y-axis direction.

The diffuser lens 19 that can diffuse the light from the LED 17 is provided at the light exit side (front side) of the LED 17. With this configuration, the brightness can be made uniform with intervals between the LEDs 17 increasing (in other words, with the number of the LEDs reducing). Accordingly, compared with the case where the diffuser lens 19 is not used, the number of the LEDs 17 and light source units U can be reduced when the uniform brightness distribution is required. This also can reduce the cost.

The LED 17 (light emitting diode) is used as the light source. The use of the LED 17 can improve the brightness and can reduce the power consumption.

### <Second Embodiment>

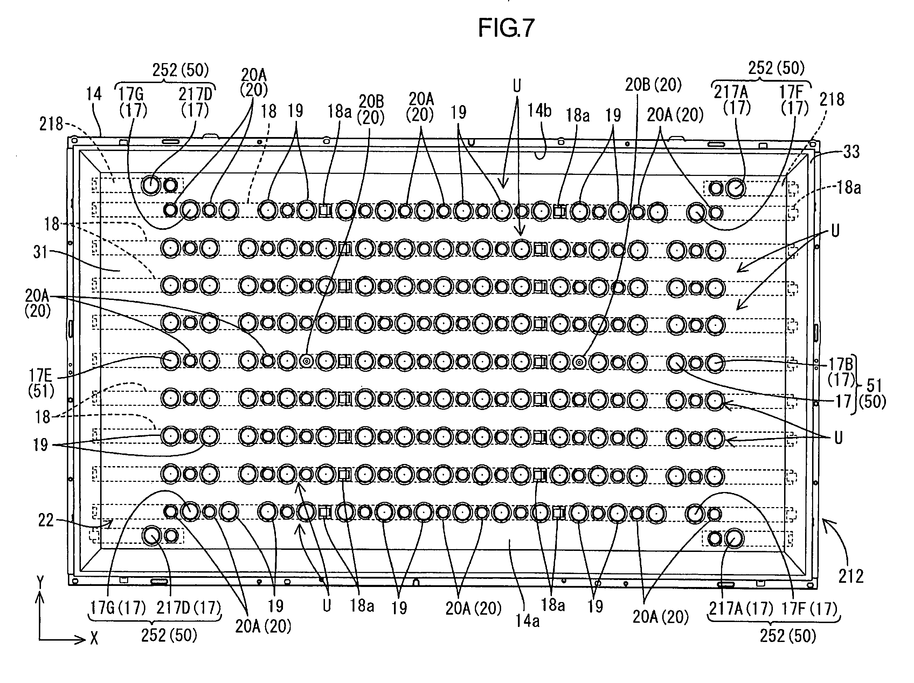

Next, the second embodiment of the present invention will be described with reference to FIG. 7. Note that, in the second embodiment described herein, the same reference symbols are used for parts same as those in the first embodiment described above, and redundant explanations are omitted. A backlight device 212 of the present embodiment has an arrangement of the LEDs 17 that is different from the above embodiment. Specifically, one of the LEDs 17 (indicated by a symbol 217A) of the end side light source group 252 that is arranged at a most distal end on a right side in FIG. 7 (one end side) in the row direction is arranged on an outer side in the X-axis direction (row direction) on the bottom plate 14a than the LED 17B of the middle light source group 51 that is arranged at a most distal end on the right side in FIG. 7 (the one end side) in the row direction. Further, the LED 217A is arranged on an outer side in the Y-axis direction on the bottom plate 14a (upper or down side in FIG. 7) than adjacent one of the LEDs 17 (indicated by a symbol 17F) of the end side light source group 252.

One of the LEDs 17 (indicated by a symbol 217D) of the end side light source group 252 that is arranged at a most distal end on a left side in FIG. 7 (one end side) in the row direction is arranged on an outer side in the X-axis direction (row direction) on the bottom plate 14a than the LED 17B of the middle light source group 51 that is arranged at a most distal end on the left side in FIG. 7 (the one end side) in the row direction. Further, the LED 217D is arranged on an outer side in the Y-axis direction on the bottom plate 14a (upper or down side in FIG. 7) than adjacent one of the LEDs 17 (indicated by a symbol 17G) of the end side light source group 252.

The end side light source group 252 is a group of LEDs 17 arranged on the upper end (or lower end) in the Y-axis direction in FIG. 7. Specifically, in the present embodiment, the LEDs 17 included in the end side light source group 252 are arranged along the X-axis direction, but not arranged in a straight line (LEDs 217A and 217D are arranged so as to be protruded to the outer side in the Y-axis and X-axis directions than the other LEDs).

In the backlight device 212 of the present embodiment, LED boards 218 each having a shorter length than the other LED boards 18 are provided to mount the above LEDs 217A and 217D thereon. The present embodiment is not limited to the configuration having the LED board 218. For example, a portion of the LED board 18 may be extended and the LED 217A and 217D may be mounted on the extended portion.

The above arrangement of the LEDs 17 allows the LEDs 217A and 217D of the end side light source group 252 that are arranged at the most distal ends on the two ends in the row direction to be arranged closer to the corresponding corner portions of the bottom plate 14a than the LEDs 17A and 17D in the first embodiment. Accordingly, the decrease in the brightness at the corner portions can be more effectively prevented.

### <Third Embodiment>

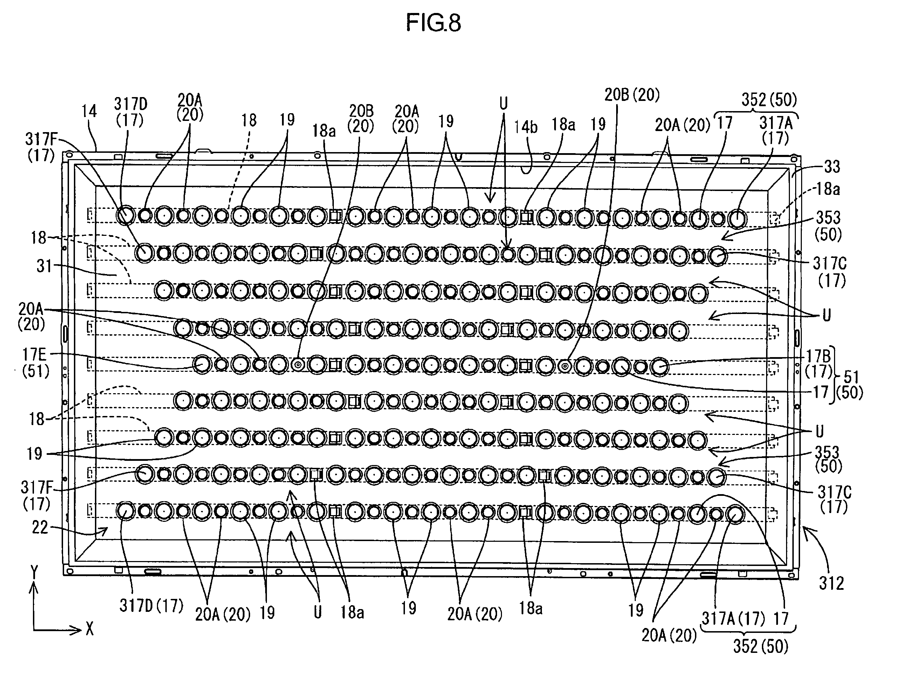

Next, the third embodiment of the present invention will be explained with reference to FIG. 8. The same reference symbols are used for parts same as those in the first embodiment described above, and redundant explanations are omitted. A backlight device 312 of the present embodiment has an arrangement of the LEDs 17 that is different from the above embodiments. Each of the LEDs 17 of the light source groups 50 that is arranged at the most distal ends in the X-axis direction is arranged so as to be gradually located on an outer side in the X-axis direction from the middle portion toward the end portions (an outer portion of the bottom plate 14a) in the Y-axis direction. This configuration will be explained with reference to an end side light source group 352 (a first end side light source group) and an end side light source group 353 (a second end side light source group) included in the end side light source groups 50 arranged in the Y-axis direction. The end side light source group 352 is arranged on the end portion in the Y-axis direction on the bottom plate 14a. The end side light source group 353 is arranged next to the end side light source group 352 on a middle side in the Y-axis direction on the bottom plate 14a from the end side light source group 352.

One of the LEDs 17 (indicated by a symbol 317A) of the end side light source group 352 that is arranged at the most distal end on a right side (one end side) in FIG. 8 is arranged on an outer side (the right side in FIG. 8) in the X-axis direction (column direction) on the bottom plate 14a than one of the LEDs 17 (indicated by a symbol 317C) of the end side light source group 353 that is arranged at the most distal end on the right side (the one end side) in FIG. 8.

One of the LED 17 (indicated by a symbol 317D) of the end side light source group 352 that is arranged at the most distal end on a left side (one end side) in FIG. 8 is arranged in the X-axis direction (column direction) on an outer side (the left side in FIG. 8) on the bottom plate 14a than one of the LEDs 17 (indicated by a symbol 317F) of the end side light source group 353 that is arranged at the most distal end on the left side (the one end side) in FIG. 8. Like the above-described embodiments, this configuration allows the LEDs 17 to be arranged closer to the corner portions of the bottom plate 14a.

### <Other Embodiments>

The present invention is not limited to the above embodiments described in the above description and the drawings. The following embodiments are also included in the technical scope of the present invention, for example.

(1) The end side light source groups 52, 252, 352 and 353, and the middle light source group 51 in the above embodiments are merely described as examples and not limited thereto. Any one of the light source groups 50 that is arranged relatively at the end portion of the bottom plate 14a may be used as the end side light source group. Any one of the light source groups 50 that is arranged relatively at the middle portion of the bottom plate 14a may be used as the middle light source group.

(2) In each of the above embodiments, the light source groups 50 at the both ends in the Y-axis direction are configured as the end side light source groups 52, 252, 352 and 352. However, only the light source group 50 that is arranged at one of the two ends in the Y-axis direction may be configured as the end side light source group.

(3) In the above embodiments, the LEDs 17 are used as a light source, but not limited thereto. A light source other than the LED may be used.

(4) In the above embodiments, the LED board 18 is arranged such that the long-side direction matches the X-axis direction, but not limited thereto. The LED board 18 may be arranged such that the long-side direction matches the Y-axis direction.

(5) In the above embodiments, TFTs are used as switching components of the liquid crystal display device. However, the technology described above can be applied to liquid crystal display devices including switching components other than TFTs (e.g., thin film diode (TFD)). Further, the technology can be applied to not only color liquid crystal display devices but also black-and-white liquid crystal display devices.

(6) In the above embodiments, the liquid crystal display device includes the liquid crystal panel as a display panel. The technology can be applied to display devices including other types of display panel.

(7) In the above embodiments, the television receiver including the tuner is used. However, the technology can be applied to a display device without a tuner.

### EXPLANATION OF SYMBOLS

10: liquid crystal display device (display device), 11: liquid crystal panel (display panel), 12, 212, 312: backlight device (lighting device), 14: chassis, 14a: bottom plate (bottom), 17: LED (light source), 17A, 17D, 217A 217D: LED (light source of the end side light source group that is arranged at a most distal end on one end (or most distal ends on two ends) in the row direction), 17B: LED (light source of the middle light source group that is arranged at a most distal end on one end (or most distal ends on two ends) in the row direction), 17F, 17G: LED (adjacent light source in the end side light source group), 19: diffuser lens, 50: light source group, 51: middle light source group, 52, 252: end side light source group (light source group at ends in the column direction), 317A, 317D: LEDs (light sources of the first end side light source group that are arranged at the most distal ends in the row direction), 317C, 317F: LEDs (light sources of the second end side light source group that are arranged at the most distal ends in the row direction), 352: end side light source group (first end side light source group), 353: end side light source group (second end side light source group), TV: television receiver

## Claims

1. A lighting device comprising:
a plurality of light sources; and
a chassis including a bottom having a rectangular shape in a plan view, the chassis being configured to house the light sources therein, wherein:
the light sources are arranged along a surface of the bottom in rows and columns in a row direction and a column direction;
the light sources arranged in the row direction configure a light source group and a plurality of light source groups are arranged in the column direction, and the light source groups include a middle light source group and an end side light source group, and the middle light source group includes the light source group provided in a middle portion of the bottom in the column direction and the end side light source group includes the light source group provided in an end portion of the bottom in the column direction; and
one of the light sources of the end side light source group that is arranged at a most distal end on one end side in the row direction is arranged on an outer side in the row direction on the bottom than one of the light sources of the middle light source group that is arranged at a most distal end on the one end side in the row direction.

2. The lighting device according to claim 1, wherein each of the light sources of the end side light source group that is arranged at the most distal end on two ends of the end side light source group in the row direction is arranged on the outer side in the row direction on the bottom than each of the light sources of the middle light source group that is arranged at the most distal end on two ends of the middle light source group in the row direction.

3. The lighting device according to one of claims 1 and 2, wherein the one of the light sources of the end side light source group that is arranged at the most distal end on the one end side in the row direction is arranged on an outer side in the column direction on the bottom than adjacent one of the light sources of the end side light source group.

4. The lighting device according to any one of claims 1 to 3, wherein:
the end side light source group includes a plurality of end side light source groups arranged in the column direction;
the end side light source groups includes a first end side light source group arranged in the end portion of the bottom in the column direction and a second end side light source group arranged in the middle portion of the bottom in the column direction; and
one of the light sources of the first end side light source group that is arranged at the most distal end on the one end side in the row direction is arranged on the outer side in the row direction on the bottom than one of the light sources of the second end side light source group that is arranged at the most distal end on the one end side in the row direction.

5. The lighting device according to any one of claims 1 to 4, wherein the light source group includes at least three light source groups arranged in the column direction, and each of the light source groups arranged at two ends in the column direction is the end side light source group.

6. The lighting device according to any one of claims 1 to 5, further comprising a diffuser lens configured to diffuse light from the light source, the diffuser lens being provided on a light exit side of the light source.

7. The lighting device according to any one of claims 1 to 6, wherein the light source is LED.

8. A display device comprising:
the lighting device according to any one of claims 1 to 7; and
a display panel configured to display by using light emitted from the lighting device.

9. The display device according to claim 8, wherein the display panel is a liquid crystal panel using liquid crystals.

10. A television receiver comprising the display device according to one of claims 8 and 9.
